# EUROPÄISCHE PATENTSCHRIFT

(11) **EP 0 585 542 B1**
(45) Veröffentlichungstag und Bekanntmachung des Hinweises auf die Patenterteilung: **27.11.1996**
(21) Anmeldenummer: 93108765.4
(22) Anmeldetag: 01.06.1993
(51) Int. Cl.: H05B 6/10, C21D 1/10

(54) **Induktor**
Inductor
Inducteur

(30) Priorität: 01.09.1992 DE 4229117; 16.09.1992 DE 4230897
(43) Veröffentlichungstag der Anmeldung: 09.03.1994
(73) Patentinhaber: AEG-Elotherm GmbH, D-42855 Remscheid (DE)
(72) Erfinder: Reinke, Friedhelm, Prof. Dr.-Ing., W-5630 Remscheid (DE); Leisner, Jürgen, W-5630 Remscheid (DE); Gezarzick, Waldemar, W-5630 Remscheid (DE)
(74) Vertreter: Cohausz & Florack Patentanwälte

(56) Entgegenhaltungen:
- DE-B- 1 198 949
- DE-B- 1 963 368
- DE-C- 3 843 457
- DE-C- 3 929 145
- DE-C- 4 021 025
- US-A- 3 649 798

## Beschreibung

Die Erfindung betrifft einen Induktor veränderlicher aktiver Länge mit zwei parallelen Hauptheizleitern zum Erwärmen einer Zone, die an einem ihrer Enden durch einen brückenförmigen Leiterast miteinander verbunden und am anderen ihrer Enden an einen Transformator angeschlossen sind, wobei die Anschlüsse einen zweiten brückenförmigen Leiterast bilden.

Ein derartiger Induktor ist aus der DE 39 29 145 C1 bekannt. Die Anpassung der Länge des Induktors an wechselnde Werkstücklängen erfolgt bei dieser bekannten Ausführung durch Zusammenschieben der Hauptheizleiter. Die veränderliche aktive Länge dient dazu, beispielsweise Gelenkwellen unterschiedlicher Länge, sonst aber etwa gleicher Abmessungen, in beliebiger Reihenfolge nacheinander für die Randschichthärtung erwärmen zu können. Bei einem Induktor mit den gattungsgemäßen Merkmalen nach der DE 38 43 457 C2 stehen bei einer Verkürzung der wirksamen Induktorlänge an diametral gegenüberliegenden Seiten je ein Heizleiter über das Ende des Werkstücks vor. Dadurch kommt es zu einer unerwünschten Erwärmung der Körnerspitzen, zwischen denen das Werkstück umlaufend eingespannt ist. Außerdem sind zwei Anpassungstransformatoren erforderlich.

Bei einem anderen bekannten Induktortyp mit den gattungsgemäßen Merkmalen sind die Heizleiter zur Veränderung der wirksamen Heizlänge mittengeteilt und können durch Veränderung des Überlappungsgrades der Heizleiterabschnitte in der Länge zur Anpassung an die jeweilige Werkstücklänge verändert werden. Dieser Induktortyp hat zwar gegenüber dem vorerwähnten den Vorteil, daß nur ein Transformator vorgesehen werden muß. Es ergibt sich jedoch der Nachteil der Kontaktierung, wo es aufgrund von Verschmutzung und Verzunderung im Überlappungsbereich zu Kontaktschwierigkeiten kommt. Bei der bekannten Induktor-Ausführung gemäß DE 40 21 025 C1 sind wie bei dem erstgenannten bekannten Induktor zwei Heizleiterschleifen vorgesehen, die von je einem Transformator gespeist werden und deren wirksame Gesamtlänge durch Relativverschiebung der beiden Induktoren gegeneinander verändert werden kann. Allerdings besteht auch hier das Problem, daß der Induktor in bestimmten Stellungen über die Werkstückenden hinausragt und eine unerwünschte Erwärmung der Körnerspitzen hervorruft.

Der Erfindung liegt nun die Aufgabe zugrunde, einen Induktor mit den gattungsgemäßen Merkmalen dahingehend zu verbessern, daß, wie bei einer erwähnten bekannten Ausführung, nur eine Wechselspannungsquelle erforderlich ist, jedoch nicht die erwähnten Kontaktprobleme auftreten und es nicht zur Erwärmung von außerhalb des Werkstücks liegenden Teilen, wie den Körnerspitzen anderer Maschinenteile, in der die zu erwärmenden Werkstücke drehbar gelagert sind, kommt. Darüberhinaus soll eine kompakte Baueinheit geschaffen werden.

Zur Lösung dieser Aufgabe wird bei dem Induktor mit den eingangs aufgeführten Merkmalen erfindungsgemäß vorgeschlagen, daß mindestens an einem Ende der parallelen Hauptheizleiter ein gegenüber diesen verschiebbar gelagerter separater Hilfsinduktor angeordnet ist, der zwei zu den Hauptheizleitern parallele, mit diesen induktiv gekoppelte Leiterabschnitte aufweist, die an ihrem einen axialen Ende durch einen dritten brückenförmigen Leiterast, der das Ende der Erwärmungs zone bestimmt, und am anderen Ende durch einen tunnelförmigen Rückleiter, der auf der gesamten Verschiebelänge unter dem zweiten brückenförmigen Leiterast der Hauptheizleiter liegt und an diesen induktiv angekoppelt ist, elektrisch leitend miteinander verbunden sind.

Die Verwendung von Kurzschlußringen zur Abschirmung magnetischer Felder ist zwar prinzipiell, nicht aber für die Lösung der Aufgabe bekannt (DE 41 03 890 A1).

Der erfindungsgemäße Induktor löst die gestellte Aufgabe.

Es ist nur ein Transformator erforderlich, um die Haupt-und Hilfsheizleiter mit Strom zu beaufschlagen. Ferner gibt es keine Kontaktierungsprobleme, weil der Hilfsinduktor nicht elektrisch leitend, sondern induktiv an den Hauptheizleiter angekoppelt ist. Ein Erwärmen von außerhalb des zu erwärmenden Werkstücks liegenden Teilen tritt nicht auf, denn die Ströme in den eng aneinander liegenden, überdeckenden Leiterabschnitten jenseits des Endes des zu erwärmenden Werkstücks fließen entgegengerichtet. Auch in den Brücken fließen entgegengesetzte Ströme, so daß es nicht zu einer unerwünschten Erwärmung der Körnerspitzen kommen kann.

Bevorzugt sind die Hauptheizleiter mit an sich, z.B. aus der DE-AS 1 198 949, für Magnetjoch bekannten L-förmigen Magnetblechen besetzt.

Anhand der Zeichnung wird ein Ausführungsbeispiel der Erfindung näher erläutert.

Es zeigen
- Fig. 1: die Induktor-Anordnung in Seitenansicht und
- Fig. 2: in perspektivischem Teilausschnitt (ohne Werkstück)
- Fig. 3: entspricht der Fig. 1 und
- Fig. 4: ist ein Teilquerschnitt längs der Linie A-B in Fig. 3

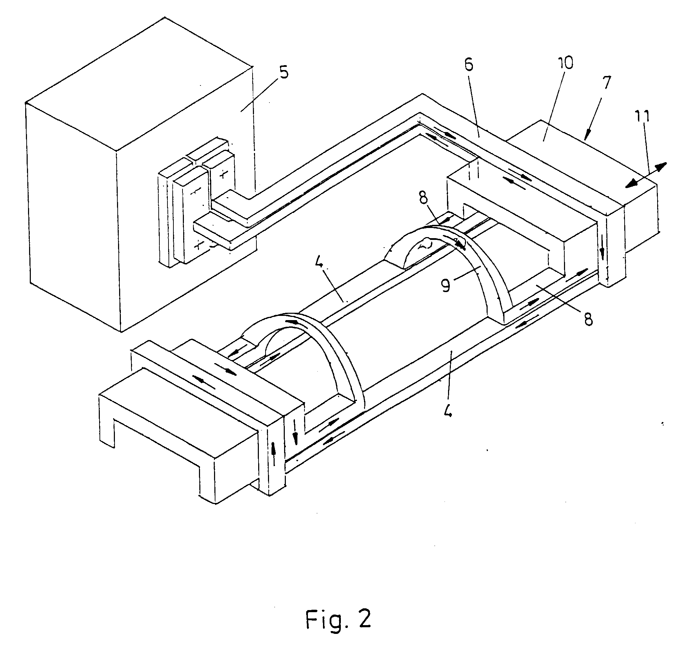

Zwischen die Körnerspitzen 1 einer Rotationsstation ist ein zu erwärmendes Werkstück 2 eingespannt, welches mittig durch ein Rollenpaar 3 unterstützt wird, damit es sich im Laufe der Erwärmung nicht verbiegt. An diametral gegenüberliegenden Seiten des Werkstücks 2 ist je ein Hauptheizleiter 4 angeordnet. Die Hauptheizleiter 4 liegen parallel zueinander und im Abstand parallel zu einer Mantellinie des Werkstücks 2. Sie sind, wie Fig. 2 durch Pfeile andeutet, in entgegengesetzten Richtungen stromdurchflossen. Die Hauptheizleiter 4 sind an einen einzigen Transformator 5 angeschlossen. An ihren axialen Enden sind sie durch brückenförmige Leiteräste 6 elektrisch leitend miteinander verbunden, entweder über die Sekundärwicklung des Anpassungstrafos oder am anderen Ende direkt.

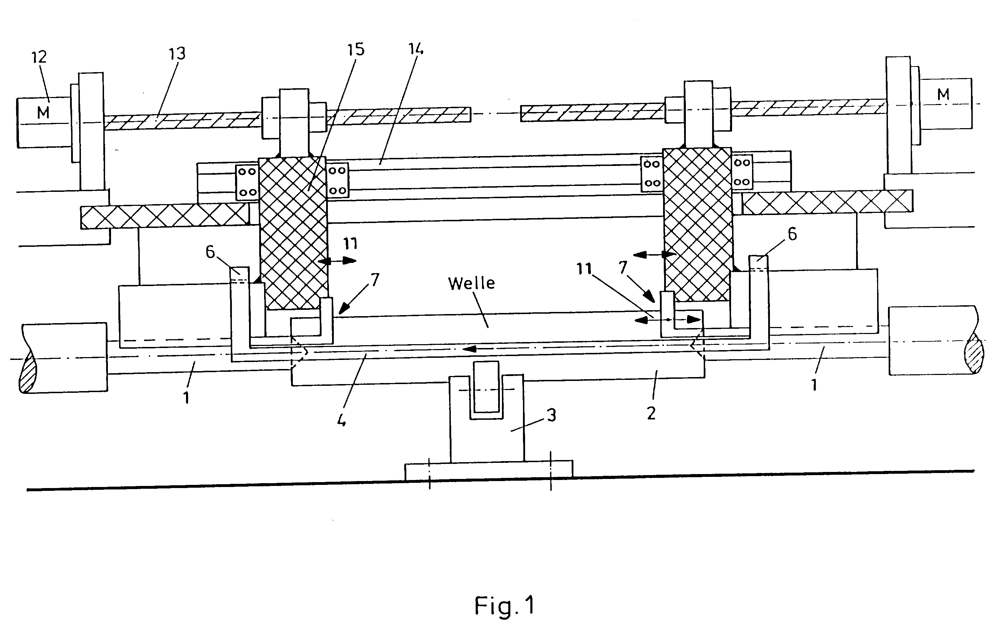

Um eine Anpassung an unterschiedliche Axiallängen von zu erwärmenden Werkstücken 2 zu ermöglichen, sind im dargestellten Ausführungsbeispiel der Fig. 1 zwei Hilfsinduktoren 7, je einer an den gegenüberliegenden Axialenden der Hauptheizleiter 4 angeordnet. Unter Umständen kommt man jedoch mit nur einem Hilfsinduktor aus, wenn die Axiallängen der Werkstücke 2 nicht allzu stark voneinander abweichen.

Jeder Hilfsinduktor besteht, wie am besten aus Fig. 2 ersichtlich ist, aus zwei parallelen Leiterabschnitten 8, die im Abstand parallel zu den Hauptheizleitern 4 sich erstrecken und mit diesen induktiv gekoppelt sind, wobei entweder Luft oder ein Isolator zwischen den Hauptheizleitern 4 und den Leiterabschnitten 8 sich befindet. Durch die Art der Kopplung des Hilfsinduktors sind die Stromrichtungen in Hauptheizleitern 4 und in den Leiterabschnitten 8 entgegengerichtet, wie durch Pfeile in Fig. 2 angedeutet ist. An ihren dem Werkstück 2 am nächsten liegenden Enden sind die Leiterabschnitte 8 durch einen der Form des Werkstücks angepaßten brückenförmigen Leiterast 9 elektrisch leitend miteinander verbunden. Am gegenüberliegenden Axialende verbindet die Enden der Leiterabschnitt 8 ein tunnelförmiger Rückleiter 10, der unter dem die Hauptheizleiter 4 verbindenden brückenförmigen Ast 6 angeordnet und induktiv an diesen angekoppelt ist. Der tunnelförmige Rückleiter 10 ist derart an den brückenförmgen Ast 6 gekoppelt, daß letzterer einen entgegengerichteten Strom in diesem tunnelförmigen Rückleiter 10 induziert. Dies geschieht aber konzentriert in dem Bereich, der unter dem brückenförmigen Ast 6 liegt, während die Nachbarbereiche des tunnelförmigen Rückleiters 10 weitgehend stromlos sind.

Je nach der gewünschten Wirklänge des Induktors werden die Hilfsinduktoren 7 axial gegenüber dem Hauptinduktor mit den Hauptheizleitern 4 axial in Pfeilrichtung 11 verschoben. Die Verschiebung bewirkt ein an der Maschine, in der das erwärmte Werkstück 2 rotierend eingespannt ist, angeordneter Verschiebemechanismus. Dieser besteht im wesentlichen aus einer durch einen Motor 12 drehbar angetriebenen Zahnstange 13, die mit einem längs einer Führung 14 axial geführtem Schieberblock 15 aus elektrisch nicht leitfähigem Material verbunden ist, der seinerseits mechanisch mit dem Hilfsinduktor 7 verbunden ist und diesen bei einer Axialverschiebung mitnimmt.

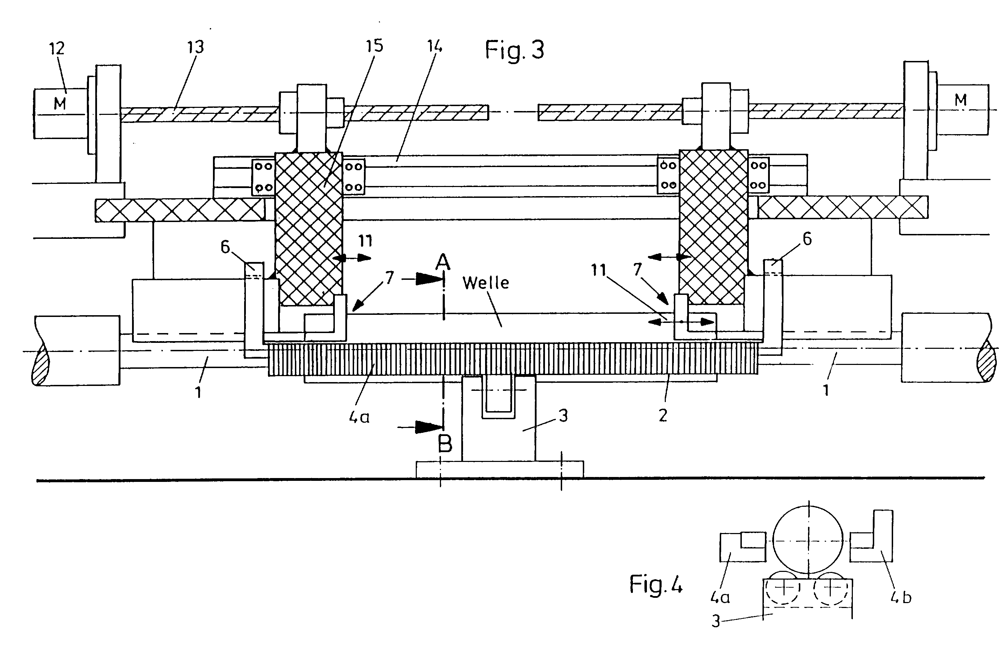

In einer anderen Ausführung der Erfindung gemäß Fig. 3 und 4 sind die Hauptheizleiter 4 mit L-förmigen Magnetblechen 4a oder 4b besetzt. Die paketierten Magnetbleche 4a, 4b dienen in erster Linie dazu, das Magnetfeld des Leiters 4 von der Stützrollenanordnung 3 fernzuhalten, und eine Störung des Magnetfeldes zu vermeiden.

## Patentansprüche

1. Induktor mit zwei parallelen Hauptheizleitern zum Erwärmen einer Zone (4), die an einem ihrer Enden durch einen brückenförmigen Leiterast (6) miteinander verbunden und am anderen ihrer Enden an einen Transformator (5) angeschlossen sind, wobei die Auschlüsse einen zweiten brückenförmigen Leiterast (6) bilden,
**dadurch gekennzeichnet**, daß mindestens an einem Ende der parallelen Hauptheizleiter (4) ein gegenüber diesen verschiebbar gelagerter separater Hilfsinduktor (7) angeordnet ist, der zwei zu den Hauptheizleitern (4) parallele, mit diesen induktiv gekoppelte Leiterabschnitte (8) aufweist, die an ihrem einen axialen Ende durch einen dritten brückenförmigen Leiterast (9), der das Ende der Erwärmungszone bestimmt und am anderen Ende durch einen tunnelförmigen Rückleiter (10), der auf der gesamten Verschiebelänge unter dem zweiten brückenförmigen Leiterast (6) der Hauptheizleiter (4) liegt und an diesen induktiv gekoppelt ist, elektrisch leitend miteinander verbunden sind.

2. Induktor nach Anspruch 1,
**dadurch gekennzeichnet**, daß die Hauptheizleiter (4) mit L-förmigen Magnetblechen (4a, 4b) versehen sind.

## Claims

1. An inductor having two parallel main heating conductors (4) for the heating of a zone which are connected to one another at one of their ends via a bridge-shaped conductor branch (6) and are connected at their other end to a transformer (5), the connections forming a second bridge-shaped conductor branch (6), characterized in that disposed at at least one end of the parallel main heating conductors (4) is a separate auxiliary inductor (7) which is mounted displaceably in relation thereto and has two conductor portions (8) parallel with the main heating conductors (4) and inductively coupled thereto which are conductively connected to one another at one of their axial ends via a third bridge-shaped conductor branch (9), which determines the end of the heating zone, and at the other end via a tunnel-shaped return conductor (10) which is disposed over the whole length of displacement beneath the second bridge-shaped conductor branch (6) of the main heating conductors (4) and is inductively coupled thereto.

2. An inductor according to claim I, characterized in that the main heating conductors (4) have L-shaped magnetic plates (4a, 4b).

## Revendications

1. Inducteur comportant deux conducteurs chauffants principaux parallèles (4) servant à chauffer une zone et qui sont reliés entre eux, par une de leurs extrémités, par une branche conductrice (6) en forme d'étrier et sont connectés, par leur autre extrémité, à un transformateur (5), les bornes formant une seconde branche conductrice (6) en forme d'étrier, caractérisé en ce que sur au moins une extrémité des conducteurs chauffants principaux parallèles (4) est disposé un inducteur auxiliaire séparé (17), qui est monté de manière à être déplaçable par rapport aux conducteurs chauffants et qui comporte deux sections conductrices (8), qui sont parallèles aux conducteurs chauffants principaux (4), qui sont couplées inductivement à ces derniers et reliées entre elles de façon électriquement conductrice, au niveau d'une de leurs extrémités axiales, par une troisième branche conductrice en forme d'étrier (9), qui détermine l'extrémité de la zone de chauffage, et au niveau de leur autre extrémité, par un conducteur de retour en forme de tunnel (10), qui est situé, sur la même longueur de déplacement, au-dessous de la seconde branche conductrice en forme d'étrier (6) des conducteurs chauffants principaux (4) et est couplé inductivement à cette branche.

2. Inducteur selon la revendication 1, caractérisé en ce que les conducteurs chauffants principaux (4) sont pourvus de tôles magnétiques (4a,4b) en forme de L.
